Europäisches Patentamt

European Patent Office

Office européen des brevets

(11) Veröffentlichungsnummer: **0 313 563**
**B1**

(12) **EUROPÄISCHE PATENTSCHRIFT**

(45) Veröffentlichungstag der Patentschrift: **22.11.90**

(51) Int. Cl.⁵: **G 01 B 7/315, G 01 C 19/02**

(21) Anmeldenummer: **87904247.1**

(22) Anmeldetag: **12.06.87**

(86) Internationale Anmeldenummer:
**PCT/EP87/00307**

(87) Internationale Veröffentlichungsnummer:
**WO 88/09913 15.12.88 Gazette 88/27**

(54) **VERFAHREN UND VORRICHTUNG ZUR RADSTELLUNGSMESSUNG.**

(43) Veröffentlichungstag der Anmeldung:
**03.05.89 Patentblatt 89/18**

(45) Bekanntmachung des Hinweises auf
die Patenterteilung:
**22.11.90 Patentblatt 90/47**

(84) Benannte Vertragsstaaten:
**DE FR GB IT**

(56) Entgegenhaltungen:
**EP-A-0 127 843**
**DE-A-3 136 145**
**FR-A-2 356 122**
**GB-A-2 057 144**
**US-A-4 151 656**
**US-A-4 245 498**

(73) Patentinhaber: **Beissbarth, Osmond**
**Sulzbacherstrasse 15**
**D-8000 München 40 (DE)**

(72) Erfinder: **Beissbarth, Osmond**
**Sulzbacherstrasse 15**
**D-8000 München 40 (DE)**

(74) Vertreter: **Patentanwälte Kirschner & Grosse**
**Forstenrieder Allee 59**
**D-8000 München 71 (DE)**

Courier Press, Leamington Spa, England.

**Beschreibung**

Die Erfindung betrifft ein Verfahren zur Radstellungsmessung, bei dem mit einem Winkelmeßgerät für jedes Rad der Winkel zwischen Rad und einer Bezugsbasis gemessen wird, ein dem jeweiligen Winkel entsprechendes elektrisches Ausgangssignal erzeugt wird und die zu ermittelnden Radstellungswerte durch geeignete Verknüpfung der Ausgangssignale errechnet werden.

Weiterhin betrifft die Erfindung eine Radstellungs-Meßvorrichtung insbesondere zur Durchführung des vorgenannten Verfahrens mit einer Winkelmeßanordnung, die zur Spurmessung mit den Rädern koppelbar ist und für jedes Rad ein elektrisches Winkelstellungs-Ausgangssignal erzeugt, und mit einer Rechenschaltung zur Bestimmung von Spurmeßwerten aus den Ausgangssignalen der Winkelmeßanordnung.

Ein solches Verfahren und eine entsprechende Radstellungs-Meßvorrichtung sind aus der DE—C—29 34 411 bekannt. Hierbei sind insgesamt sechs Winkelmeßgeräte vorgesehen, wobei zwei Winkelmeßgeräte an den Vorderrädern zur Messung des Gesamtspurwinkels der Vorderräder, zwei weitere Winkelmeßgeräte an dem linken Vorderrad und dem linken Hinterrad zur Messung der Winkelstellungen dieser Räder und zwei weitere Winkelmeßgeräte an dem rechten Vorderrad und dem rechten Hinterrad zur Messung der Winkelstellungen dieser Rädern vorgesehen sind. Die ersten beiden Winkelmeßgeräte sind hierbei mit den weiteren Winkelmeßgeräten an den Vorderrädern starr verbunden. Mittels geeigneter Rechenschaltungen sind aus den Winkelstellungen aller Winkelmeßgeräte die Spurmeßwerte bestimmbar.

Aus der US—A—4 151 656 ist ein von Hand bedienbares, mit einem Kreisel versehenes Anzeigegerät bekannt, das beispielsweise von Architekten benutzt werden kann, um im Hochbau die Winkellagen von unbekannten geometrischen Ebenen in bezug auf eine bekannte geometrische Ebene zu messen. Das Gerät wird beispielsweise an die Balken einer Dachkonstruktion angelegte, um die winkel messen zu können, die die Balken der Dachkonstruktion untereinander bilden. Wenn die relative Lage zweier Balken zueinander gemessen werden soll, wird zunächst die Orientierung des einen Balkens als Meßbasis genommen, und dann kann die räumliche Orientierung des anderen Balkens als vertikaler und horizontaler Winkel gegenüber dem erstgenannten Balken bestimmt werden.

Aus der DE—A1—31 36 145 ist ein Gerät zum Prüfen der Fahrwerksgeometrie von Kraftfahrzeugen bekannt, bei dem vier Meßköpfe, die in einer stationären Meßbasis angeordnet sind, an die Räder angestellt werden, um die Spur und/oder Sturzwinkel des Kraftfahrzeugs zu messen.

Obwohl diese bekannte Radstellungs-Meßvorrichtung gegenüber den üblicherweise verwendeten Radstellungs-Meßvorrichtungen, die einen ortsfesten Meßrahmen voraussetzen, auf dem das zu vermessende Fahrzeug angeordnet wird, bereits den Vorteil hat, daß es ohne äußeres Bezugssystem auskommt, d.h. ortsunabhängig ist, ist die Anbringung der zahlreichen Winkelmeßgeräte an den einzelnen Rädern umständlich und zeitraubend und aufgrund der Vielzahl der erforderlichen Winkelmeßgeräte ist die bekannte Radstellungs-Meßvorrichtung auch in apparativer Hinsicht relativ aufwendig.

Der vorliegenden Erfindung liegt demgegenüber die Aufgabe zugrunde, das bekannte Verfahren und die bekannte Vorrichtung dahingehend zu verbessern, daß der erforderliche apparative Aufwand vermindert wird und daß die Vermessung beschleunigt und vereinfacht wird. Gleichzeitig soll jedoch die Ortsunabhängigkeit des Systems gewahrt bleiben, d.h. es soll ohne äußeres Bezugssystem auskommen.

Zur Lösung dieser Aufgabe ist hinsichtlich des Verfahrens erfindungsgemäß vorgesehen, daß als Bezugsbasis ein rotierender, kardanisch aufgehängter Kreisel verwendet wird, daß dieses richtungsstabile Element nacheinander von Rad zu Rad gebracht wird, um den entsprechenden Winkel zu messen, und daß nach jeder Messung der für das jeweilige Rad gemessene Winkel abgespeichert wird.

Im Falle des erfindungsgemäßen Verfahrens ist somit nur ein einziges Winkelmeßgerät erforderlich, wobei mit diesem einen Winkelmeßgerät nacheinander die Spurwinkel der zu vermessenden Räder gemessen werden und aufgrund der abgespeicherten Meßwerte anschließend über geeignete Rechenschaltungen die Radstellungswerte ermittelt werden. Nachdem die Rotationsachse eines rotierenden, kardanisch aufgehängten Kreisels im Raum stets richtungsstabil bleibt, kann das Winkelmeßgerät zwischen zwei Messungen in beliebiger Weise im Raum bewegt werden, ohne daß sich die Richtung der Rotationsachse des Kreisels ändert. Es wird somit an jedem Rad der Winkel gegenüber einer stets richtungsstabilen Achse gemessen.

Das erfindungsgemäße Verfahren ermöglicht eine besonders einfache und rasche Durchführung der Vermessungsarbeiten, nachdem es nicht erforderlich ist, mehrere Meßköpfe an unterschiedlichen Rädern zu befestigen und gegeneinander zu justieren.

In vorteilhafter Weiterbildung des erfindungsgemäßen Verfahrens ist vorgesehen, daß zu Beginn der Vermessung zunächst die Richtung der Bezugsbasis an einem Teil des Fahrzeugs eingestellt wird und anschließend bis zum Ende der Vermessung unverändert bleibt. Die Einstellung kann hierbei insbesondere an einem Hinterrad, vorzugsweise am linken Hinterrad, vorgenommen werden, oder an einer anderen Referenzbasis des Fahrzeugs wie beispielsweise die oberen Anlenkpunkte der Federbeine. Diese Referenzbasis sollte mit der Symmetrieachse des Fahrzeugs identisch sein, wobei die Auswahl der Referenzbasis der Entscheidung der Fahrzeughersteller überlassen bleibt, die für ihre Fahrzeugtypen Rahmenkontrollpunkte bekanntgeben.

Im ersten Falle wird somit der Kreisel an einem Hinterrad gestartet, es werden anschließend die Richtungsdifferenzen der übrigen Räder zu diesem Hinterrad erfaßt, gespeichert und schließlich werden die Speicher zur Ermittlung der Radstellungswerte gegeneinander verrechnet.

Im Falle der zweiten Alternative besteht die Meßmethode darin, den Kreisel an einer Referenzbasis zu starten, die Richtungsdifferenzen der Räder relativ zu dieser Referenzbasis zu erfassen, zu speichern und die Speicher dann gegenseitig zu verrechnen.

Das anfängliche Einstellen der Richtung der Bezugsbasis an einem Rad oder einem anderen Fahrzeugteil erfolgt vorzugsweise derart, daß in der eingestellten Richtung der Winkelmesser ein Ausgangssignal "O" gibt, so daß die Größe der Ausgangssignale des Winkelmeßgerätes bei Vermessung der übrigen Räder der tatsächlichen Abweichung der Radstellungen von dem Ausgangswert entspricht.

Gemäß einem weiteren vorteilhaften Merkmal der Erfindung ist vorgesehen, daß zur Durchführung der Messung an den einzelnen Rädern das Winkelmeßgerät lediglich gegen das zu vermessende Rad gehalten wird, ohne mit diesem fest verbunden zu werden. Dies ist im Falle der vorliegenden Erfindung möglich, nachdem im Gegensatz zum bekannten Stand der Technik nur ein einziges Winkelmeßgerät vorgesehen ist, welches leicht von einer einzigen Bedienungsperson gehalten und an die Räder nacheinander angelegt werden kann.

Falls der eine oder andere Fahrzeughersteller es für wünschenswerte hält, daß das Winkelmeßgerät auf genormte Schnellspannvorrichtungen aufgesetzt oder angelegt wird, kann das Winkelmeßgerät selbstverständlich auch auf eine solche Aufspannvorrichtung aufgesetzt oder aufgesteckt werden. Solch eine Aufspannvorrichtung kann beispielsweise an der Radaufnahmebasis oder an den Bremsscheiben angreifen und ist damit unabhängig von der Form des Felgenhorns.

Da bei einem Kreisel als die Rotationsachse im Raum richtungsstabil ist, die Durchführung der Vermessungsarbeiten jedoch einige Zeit in Anspruch nimmt, ergibt sich aufgrund der Erdumdrehung eine Drift der Kreiselachse in horizontaler Richtung, die im Laufe der Vermessungsarbeiten immer mehr zunimmt. Diese Drift der Kreiselachse aufgrund der Erdrotation kann bei sehr genauen Messungen zu verfälschten Meßergebnissen führen. In besonders vorteilhafter Weiterbildung des erfindungsgemäßen Verfahrens ist daher vorgesehen, daß die gemessenen Winkel um den sich aus der Erddrehung ergebenden Driftkorrekturwinkel korrigiert werden.

Der Driftwinkel ist abhängig von der geographischen Breite. Nachdem seitens des Herstellers nicht vorhersehbar ist, wo die jeweilige Radstellungs-Meßvorrichtung verwendet wird, kann der Driftwinkel pro Zeiteinheit herstellerseitig nicht vorgegeben bzw. in die Rechenschaltung integriert werden. Vielmehr muß der Driftwinkel pro Zeiteinheit in Abhängigkeit vom jeweiligen Ort der Benutzung in das Gerät eingespeichert werden. Hierzu wäre es möglich, daß der Benutzer die dem jeweiligen Standort entsprechenden Werte beispielsweise über eine Tastatur in die Meßvorrichtung eingibt.

In bevorzugter Weise ist jedoch vorgesehen, daß vor der ersten Messung an einer bestimmten Betriebsstätte der Driftwinkel der Bezugsbasis pro Zeiteinheit gemessen wird und daß dieser Driftwinkel pro Zeiteinheit dann selbsttätig in der Vorrichtung abgespeichert wird.

Zur Berechnung des jeweiligen Driftkorrekturwinkels wird dann vorzugsweise so vorgegangen, daß während der Vermessung die seit Einstellung der Richtung der Bezugsbasis verstrichene Zeit gemessen wird und mit dem zuvor gemessenen Driftwinkel pro Zeiteinheit multipliziert wird, um den Driftkorrekturwinkel in Abhängigkeit von der Zeit zu erhalten. Es wird somit beim erfindungsgemäßen Verfahren bei jeder einzelnen Messung der entsprechende Driftkorrekturwinkel ermittelt und das Meßergebnis wird um diesen Driftkorrekturwinkel korrigiert. Die Berechnung der Radstellungswerte erfolgt dann aufgrund der bereits korrigierten Winkelmeßwerte.

Die erfindungsgemäße Radstellungs-Meßvorrichtung ist dadurch gekennzeichnet, daß die Winkelmeßanordnung ein einziges, mit jeweils einem der Räder koppelbares Winkelmeßgerät umfaßt, das als Bezugsbasis für den mittels des Winkelmeßgerätes zu messenden Winkel ein ein kardanisch aufgehängter Kreisel im Winkelmeßgerät vorgesehen ist, und daß Speichereinrichtungen vorgesehen sind, um die gemessenen Winkel für jedes der Räder zu speichern.

Zur Richtungsaufnahme des Winkelmeßgerätes ist vorzugsweise vorgesehen, daß an einer Vorderseite des Gehäuses des Winkelmeßgerätes eine Ausrichtvorrichtung zum Ausrichten des Winkelmeßgerätes relativ zu den zu vermessenden Rädern und gegebenenfalls zusätzlich relativ zu einem anderen Fahrzeugteil angeordnet ist.

In bevorzugter Ausgestaltung der Erfindung wird die Ausrichtvorrichtung von einem mit dem Gehäuse des Winkelmeßgerätes starr verbundenen Lineal gebildet, das sich in horizontaler Richtung erstreckt und bei der Vermessung parallel zum Rad angeordnet ist. Über dieses Lineal, welches zweckmäßigerweise mit verschiebbaren Taststiften versehen sein kann, wird das Winkelmeßgerät von Hand an das zu vermessende Rad angelegt. Vorrichtungen, um das Winkelmeßgerät starr und selbsttragend mit dem Rad zu verbinden, sind nicht notwendig.

Die Anordnung des Kreisels und der Kardanringe wird zweckmäßigerweise so gewählt, daß die Achse des äußeren Kardanrings vertikal angeordnet ist und daß die Rotationsachse des Kreisels im Betrieb im wesentlichen senkrecht zu dem zu vermessenden Rad angeordnet ist.

Wie bereits weiter oben erwähnt, ist es zweckmäßig, vor Beginn der Vermessungsarbeiten das im Raum richtungsstabile Bezugselement so einzustellen, daß der mit ihm verbundene Winkelgeber in der Ausgangslage ein Ausgangssignal "O" abgibt. Zu diesem Zwecke ist in weiterer Ausbildung der Erfindung eine Einstelleinrichtung vorgesehen, um den äußeren Kardanring relativ zum Gehäuse derart in die Ausgangslage zu verschwenken, daß die Rotationsachse des ruhenden Kreisels senkrecht zu der von der Ausrichtvorrichtung definierten Bezugsgeraden, also insbesondere senkrecht zu dem Lineal steht.

Ein besonders einfacher Aufbau des Winkelmeßgeräts ergibt sich dann, wenn der Winkelgeber konzentrisch zur Achse des äußeren Kardanrings angeordnet ist und mit dieser Achse gekoppelt ist.

Das Winkelmeßgerät ist von Rad zu Rad tragbar und die Anzeigeeinheit kann stationär angeordnet und mit dem Winkelmeßgerät über flexible Kabel verbunden sein. Die Anzeigeeinheit kann digital anzeigen und/oder einen Bildschirm umfassen; weiterhin kann die elektronische Speicher- und Rechenschaltung ebenfalls in der stationären Baueinheit untergebracht sein.

Weitere vorteilhafte Ausgestaltungen der Erfindung ergeben sich aus den übrigen abhängigen Patentansprüchen sowie aus der nachfolgenden Beschreibung.

In der Zeichnung zeigen:

Fig. 1 eine schematische Darstellung der erfindungsgemäßen Radstellungs-Meßvorrichtung;

Fig. 2 eine Draufsicht auf das Winkelmeßgerät der Radstellungs-Meßvorrichtung gemäß Fig. 1;

Fig. 3 eine Seitenansicht auf das Winkelmeßgerät gemäß Fig. 2 in Richtung des Pfeils III;

Fig. 4 ein schematisches Blockschaltbild der Schaltung zur Bestimmung der Spurwerte;

Fig. 5 eine Schalttafel der stationären Einheit der Radstellungs-Meßvorrichtung; und

Fig. 6 ein schematisches Blockschaltbild einer Schaltung zur Bestimmung der Einschlagwinkel.

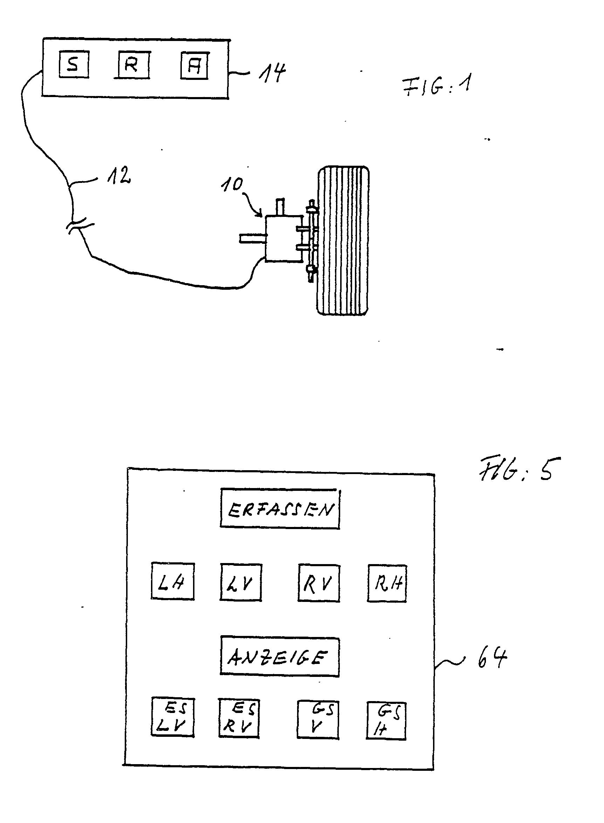

Die in Fig. 1 dargestellte Radstellungs-Meßvorrichtung umfaßt ein mobiles, tragbares Winkelmeßgerät 10, welches über eine elektrische Leitung 12 mit einer stationären Baueinheit 14 verbunden ist. Die stationäre Baueinheit 14 umfaßt Speicher S zum Speichern der im Winkelmeßgerät 10 gemessenen Meßwerte, Rechenschaltungen R zum Berechnen der sich aus den Meßwerten ergebenden Radstellungswerte (Spurwerte) und eine Anzeigeeinheit A in Form eines Bildschirms zur Anzeige der errechneten Radstellungswerte, z.B. Einzelspurwerte, Spurdifferenzwinkel und dergleichen.

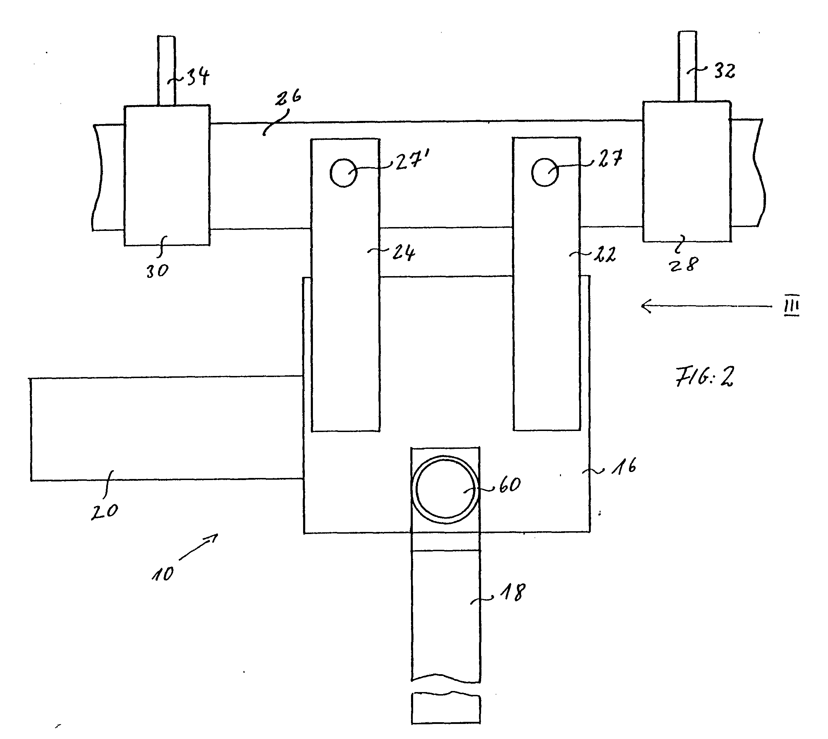

Das Winkelmeßgerät 10, das in Fig. 2 in Draufsicht dargestellt ist, umfaßt ein Gehäuse 16, an dem zwei sich in einer horizontalen Ebene erstreckende Handgriffe 18, 20 befestigt sind, die zueinander in einem rechten Winkel angeordnet sind. Der eine Handgriff 18 sitzt an der Rückseite des Gehäuses 16, der andere Handgriff 20 sitzt senkrecht zu dem Handgriff 18 an einer Seitenwand des Gehäuses. Mit zwei parallelen Trägern 22, 24 ist an der Vorderseite des Gehäuses 16 parallel hierzu ein horizontal, d.h. in der Zeichenebene von Fig. 2, angeordnetes Lineal 26 über Bolzen 27, 27′ befestigt. Das Lineal 26 erstreckt sich in seiner Längsrichtung beidseitig über die Breite des Gehäuses 16 hinaus und trägt beidseitig über jeweils eine längs des Lineals 26 verschiebbare und lösbar arretierte Schiebeführung 28, 30 je einen Taststift 32, 34, der sich in horizontaler Richtung (in der Zeichenebene von Fig. 2) senkrecht zum Lineal 26 nach vorne erstreckt.

Das mit dem Gehäuse 16 verbundene Lineal 26 mit den hierauf verschiebbar gelagerten Taststiften 32, 34 dient dazu, das Winkelmeßgerät 10 an das Felgenhorn des zu vermessenden Rades anzulegen, indem die Meßvorrichtung 10, die von Hand an den Handgriffen 18, 20 getragen wird, mit den Taststiften an dem Felgenhorn gehalten wird.

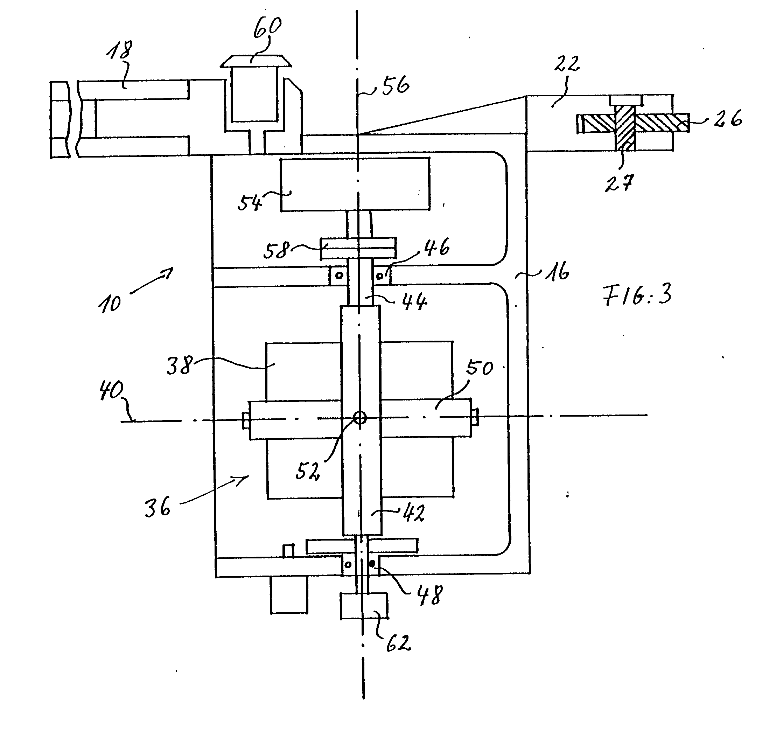

Wie in Fig. 3 gezeigt ist, ist innerhalb des Gehäuses 16 des Winkelmeßgeräts 10 ein Kreiselaggregat 36 angeordnet, das einen vorzugsweise mittels eines Asynchronmotors 38 angetriebenen Kreisel mit einer im Betrieb im wesentlichen horizontal ausgerichteten Rotorachse 40 aufweist. Der Kreiselkörper wirkt als Kurzschlußanker für den Asynchronmotor 38 und dreht sich ohne Reibung durch Bürsten mit bis zu 40000 u/min. Das Kreiselaggregat 36 umfaßt einen äußeren Kardanring 42, der über eine vertikale Achse 44 in am Gehäuse ausgebildeten Lagern 46, 48 gelagert ist, und einen inneren Kardanring 50, der im äußeren Kardanring 42 um die horizontale Achse 52 schwenkbar gelagert ist. Der Kreisel ist im inneren Kardanring 50 um die Rotationsachse 40 drehbar gelagert.

Oberhalb (Blickrichtung wie in Fig. 3) des Kreiselaggregats 36 ist im Gehäuse 16 des Winkelmeßgeräts 10 ein Winkelgeber 54 angeordnet und mit dem Gehäuse 16 fest verbunden. Als Winkelgeber 54 wird vorzugsweise ein Inkremental-Geber oder ein Drehpotentiometer verwendet. Die Achse 56 des Winkelgebers 54 ist vertikal und koaxial zur Achse 44 des äußeren Kardanrings 42 angeordnet. Die Achse 56 des Winkelgebers 54 ist über eine Kupplung 58 mit der Achse 44 gekoppelt.

Eine Drucktaste 60 ist an der Oberseite des gehäusenahen Endes des Handgriffs 18 derart angeordnet, daß sie während des Anhaltens des Winkelmeßgeräts leicht, insbesondere mittels des Daumens, betätigbar ist. Durch Betätigen der Drucktaste 60 wird zur Durchführung der Winkelmessung das Ausgangssignal des Winkelgebers 54 abgerufen und, wie noch beschrieben wird, abgespeichert.

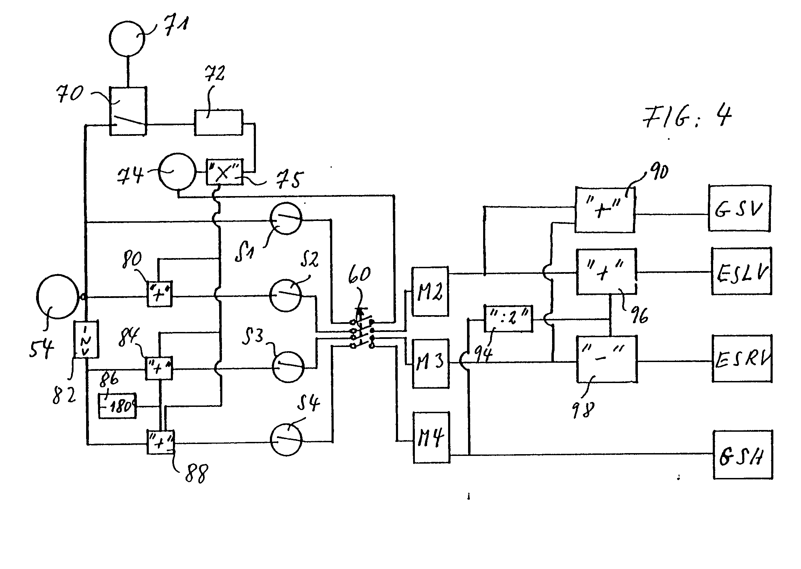

Mittels eines Drehknopfes 62, der mit der Achse 44 des äußeren Kardanrings 42 in Verbindung steht, kann vor dem Start des Kreisels der äußere Kardanring 42 so eingestellt werden, daß die Rotationsachse 40 des Kreisels exakt im rechten Winkel zum Lineal 26 steht, wobei in dieser Ausgangsstellung der elektrische Winkelmesser 54 eine Ausgangsspannung "O" ergibt. Die Möglichkeit, den Kreisel auf "O" einzustellen ist dann besonders vorteilhaft, wenn als Winkelgeber ein Potentiometer verwendet wird, wie noch anhand von Fig. 4 näher erläutert wird. Wenn bei Verwendung eines Potentiometers die Nulleinstellung des Kreisels bei Beginn der Messung vermieden werden soll, kann eine von "O" abweichende

Ausgangslage des Potentiometers durch eine RESET-Schaltung in üblicher Weise ausgeglichen werden. Wenn als Winkelkgeber ein sogenannter inkrementeller Winkelgeber verwendet wird, ist die Null-Stellung unbeachtlich, da solche inkrementellen Winkelgeber die Winkeldifferenz zwischen der Ausgangslage und einer Meßlage als Ausgangssignal abgeben.

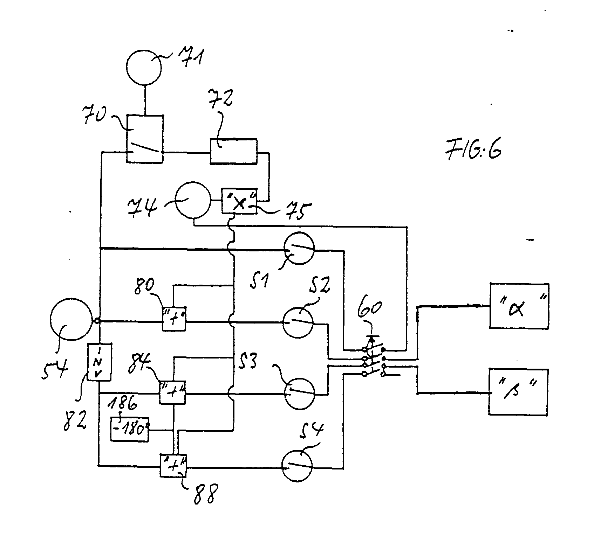

Die vorzugsweise in der Einheit 14 untergebrachte Elektronik der Radstellungs-Meßvorrichtung soll die Winkeldifferenzen zwischen der Meßbasis und der Laufrichtung der zu überprüfenden Räder erfassen und abspeichern und anschließend die gespeicherten Werte in die tatsächlichen Meßergebnisse umrechnen, die dann in der Anzeigeeinheit A angezeigt werden können. Die elektronische Schaltung unterteilt sich hierzu im wesentlichen in drei Abschnitte, nämlich eine Schaltung zur Errechnung des Driftkorrekturwertes, eine Schaltung zur Erfassung und Speicherung der Meßwerte und eine Schaltung zur Errechnung der Meßergebnisse aus den gespeicherten Meßwerten. Die beiden erstgenannten Schaltungen sind für alle Ausführungsbeispiele, die im folgenden beschrieben werden, diegleichen. Lediglich die Schaltungen zur Errechnung der Meßergebnisse unterscheiden sich in den Fig. 4 und 6. Die Meßergebnisse, die in der Schaltung von Fig. 4 errechnet werden, beziehen sich auf die Spurwerte des Kraftfahrzeugs. Die Meßergebnisse, die in der Schaltung von Fig. 6 errechnet werden, sind Werte, die sich auf die Einschlagwinkel beziehen.

Zunächst wird die Rechenschaltung beschrieben, durch die die Drift des Kreisels mit der Zeit errechnet wird. Die Drift des Kreisels muß deshalb berücksichtigt werden, weil das Anlagen des winkelmeßgerätes nacheinander an alle zu vermessenden Räder, also beispielsweise an vier, sechs oder acht Räder, eine gewisse Zeit erfordert. Da der Kreisel unabhängig von der Erdrotation richtungsstabil arbeitet, ergibt sich während der Meßdauer eine Richtungsänderung der Kreiselachse gegenüber dem Fahrzeug. Dieses Phänomen ist unter der Bezeichnung "scheinbare Drift" bekannt. Die Größe des Driftwinkels ist abhängig von der verstreichenden Zeit und von der geographischen Breite. Es ist bekannt, daß der Driftwinkel ziemlich genau 15° mal sinus θ pro Stunde in der geographischen Breite θ darstellt. Beispielsweise ergibt sich bei der mittleren Breite von 45° hieraus ein Driftwinkel von 10,6° pro Stunde oder 10,6 Bogenminuten je Zeitminute. Um eine exakte Vermessung sicher zu stellen, müssen daher diese, sich aus der scheinbaren Drift ergebende Veränderungen korrigiert werden. Da der jeweilige Aufstellungsort der Radstellungs-Meßvorrichtung nicht bekannt ist, kann der jeweils geltende Driftwinkel herstellerseitig nicht vorgegeben werden. Es ist daher eine Rechenschaltung vorgesehen, die den jeweils geltenden Driftwinkel selbst errechnen kann. Diese Rechenschaltung umfaßt einen Schalter 71 zum Starten des Zeitrelais 70 sowie einen Speicher 72. Diese Rechenschaltung ist an den Winkelmesser 54 angeschlossen. Das Winkelmeßgerät 10 wird an eine vorbereitete Stelle des Unterbaus der Einheit 14 angelegt oder angeklemmt und der Kreisel wird in Betrieb genommen. Nach Betätigung des Schalters 71 mißt der Winkelgeber 54 während einer vorbestimmten Zeitdauer, beispielsweise während einer Minute, die Winkelveränderung, die sich durch die Erddrehung gegenüber der Drehricthung de Kreisels ergibt und gibt diese Ausgangsspannung in den Speicher 72 ein. Nach Ablauf der vorbestimmten Zeitdauer unterbricht das Zeitrelais 70 die Verbindung zwischen dem Winkelgeber 54 und dem Speicher 72. Die zu diesem Zeitpunkt anstehende Ausgangsspannung des Winkelgebers bleibt im Speicher 72 erhalten und stellt den für den jeweiligen Einsatzort geltenden Wert für den Driftwinkel pro Zeiteinheit dar. Solange die Radstellungs-Meßvorrichtung am gleichen Platz verbleibt, bleibt auch dieser einmal ermittelte Wert des Driftwinkels pro Zeiteinheit im Speicher 72 abrufbar gespeichert.

Der für den jeweils gemessenen Winkel eines Rades geltende Driftkorrekturwinkel wird in einer weiteren Rechenschaltung dadurch ermittelt, daß der im Speicher 72 beispielsweise in Form von Bogensekunden pro Zeitsekunde gespeicherte Driftwinkel pro Zeiteinheit mit den seit Beginn der Messung anfallenden Zeitsekunden multipliziert wird. Zu diesem Zweck ist vorgesehen, daß gleichzeigt mit der Eingabe des ersten Meßwertes in die Schaltung während des Anlegens des Meßgerätes an das erste Rad ein elektronischer Taktgeber 74 (eine Uhr) in Gang gesetzt wird, der die seit Messungsbeginn verstrichene Zeit angibt. Der Wert des Driftwinkels pro Zeiteinheit wird mit dem Signal, das die verstrichene Zeit darstellt, in einer Multiplikationsschaltung 75 laufend multipliziert, um den jeweils geltenden Driftkorrekturwinkel zu errechnen, der jederzeit abge' 'fen werden kann, ohne daß die Mulitplikation unterbrochen würde.

Die Rechenschaltung, die den Basiswert für den Driftwinkel pro Zeiteinheit für eine bestimmte geographische Lage des Meßortes ermittelt und speichert sowie die Schaltung, die aus diesem gespeicherten Wert die Driftkorrektur während der Messung vornimmt, ist für alle nachfolgend beschriebenen Schaltungen gleich.

Im folgenden wird die Schaltung von Fig. 4 und deren Funktion näher beschrieben. Es sind verschiedene Meßmethoden und Verrechnungsarten möglich, um die Spur aller Räder eines Kraftfahrzeuges errechnen zu können. Das einfachste Verfahren besteht darin, daß eines der zu vermessenden Räder, vorzugsweise das linke Hinterrad, zur Meßbasis erklärt wird. In diesem Falle wird das Winkelmeßgerät 10 an dieses Rad angehalten und das Kreiselaggregat 36 wird gestartet. Sobald der Kreisel seine volle Drehzahl erreicht hat, wird durch Tastendruck der Taktgeber 74 gestartet, so daß die fortlaufende Errechnung des Driftkorrekturwinkels beginnt.

Das Winkelmeßgerät wird dann der Reihe nach an die anderen, zu vermessenden Räder angehalten, und es wird so die Differenz zwischen der Laufrichtung der Räder und der Meßbasis erfaßt. Durch Tastendruck auf die Drucktaste 60 wird das jeweilige Ausgangssignal des Winkelmessers 54 zu dem zu diesem Zeitpunkt gültigen Wert des Driftkorrekturwinkels addiert und in einem dem betreffenden Rad zugeordneten Speicher M2 bis M4 eingegeben. Bis zum Ablauf der letzten Messung läuft der Kreisel auf voller Drehzahl. Nach Beendigung dieser Arbeitsgänge kann die Berechnung der tatsächlichen Spurwerte einzeln oder gesamt sowie deren Darstellung in der Anzeigeeinheit A durch Drücken des Programmschalters "Anzeige" initiiert werden. Die vorstehend beschriebene Methode ermöglicht die Berechnung der Gesamtspur der Vorderräder, der Gesamtspur der Hinterräder, sowie die Einzelspur der Vorderräder bezogen auf die geometrische Fahrachse.

Zur Erfassung der Meßwerte wird nach Betätigung des Programmschalters "Erfassung" die Vorwahltaste "LH" (Fig. 5) gedrückt, wodurch der Schalter S1 (Fig. 4) geschlossen wird, und das Winkelmeßgerät 10 wird an das linke Hinterrad angelegt. Bei Druck auf die Drucktaste 60 beginnt der Taktgeber 74 zur Berechnung des Driftkorrekturwinkels aus dem Produkt der verstrichenen Zeit und des im Speicher 72 bereits eingespeicherten Wertes des Driftwinkels pro Zeiteinheit zu laufen.

Anschließend wird die Vorwahltaste "LV" (Fig. 5) betätigt, wodurch der Schalter S2 (Fig. 4) geschlossen wird, und das Winkelmeßgerät 10 wird an das linke Vorderrad angelegt. Beim Druck auf die Drucktaste 60 werden das Ausgangssignal des Winkelgebers 54 und das Ausgangssignal der Multiplikationsschaltung 75 an eine Additionsschaltung 80 abgegeben, dort addiert und in dem Speicher M2 gespeichert.

Anschließend wird die Vorwahltaste "RV" (Fig. 5) betätigt, wodurch der Schalter S3 (Fig. 4) geschlossen wird, und das Winkelmeßgerät 10 wird am rechten Vorderrad angelegt. Bei Betätigung der Drucktaste 60 geht nunmehr das Ausgangssignal des Winkelgebers 54 über einen Inverter 82 zusammen mit dem Ausgangsignal der Multiplikationsschaltung 75 in eine Additionsschaltung 84 ein. In der Additionsschaltung 84 werden die beiden Ausgangssignale mit einem weiteren Signal addiert, welches einem Winkel von −180 Grad entspricht und der Additionsschaltung 84 von einer Korrekturschaltung 86 zugeführt wird. Die Eingabe eines Korrekturwinkels von −180 Grad dient zum Ausgleich der Lageänderung des Winkelmeßgerätes, wenn es auf die andere Fahrzeugseite verbracht wird. Das Ausgangssignal der Additionsschaltung 84 gelangt über den Schalter S3 in den Speicher M3.

Anschließend wird die Vorwahltaste "RH" (Fig. 5) gedrückt, wodurch der Schalter S4 (Fig. 4) geschlossen wird, und das Winkelmeßgerät 10 wird an das rechte Hinterrad angelegt. Das Ausgangssignal des Winkelgebers 54 gelangt zusammen mit dem Ausgangssignal der Multiplikationsschaltung 75 und dem Ausgangssignal der Korrekturschaltung 86 zu einer Additionsschaltung 88, in der die Eingangssignale addiert werden. Das Ausgangssignal der Additionsschaltung 88 gelangt über den Schalter S4 in den Speicher M4.

In den Speichern M2 bis M4 befinden sich somit nach Abschluß des Meßvorganges die Meßwerte, die den Rädern vorne links, vorne rechts und hinten rechts des Kraftfahrzeuges zugeordnet sind.

Fig. 5 zeigt, wie in der Einheit 14 je ein Programmschalter für die Erfassung und Speicherung der Meßwerte einerseits und für die Berechnung der Spurwerte und Anzeige andererseits vorgesehen sind. Eine diese Programmschalter umfassende Schalttafel weist ferner für jedes Rad eine Taste auf, die durch ihre Bezeichnung auf das jeweilige zu vermessende Rad hinweist. Die Schalttafel 64 (Fig. 5) hat die Tasten "LH" für "linkes Hinterrad", "LV" für "linkes vorderrad", "RV" für "rechtes Vorderrad" und "RH" für "rechtes Hinterrad".

Nach Umschaltung der Programmschalter in Fig. 5 auf "Anzeige" werden aus den in den Speichern M2 bis M4 abgespeicherten, korrigierten Werten die Spurwerte ermittelt. Bei der Schaltung von Fig. 4 wird davon ausgegangen, daß der Winkelgeber 54 beim Anlegen an das linke Hinterrad der Wert "O" hat, wenn es sich um einen Potentiometer handelt. Da der Meßwert für das linke Hinterrad somit gleich Null ist, geht er auch in die Berechnung der Spurwerte nicht ein. Die Gesamtspur der Vorderräder GSV (Fig. 4) wird durch Addition der Ausgangssignale der Speicher M2 und M3 in der Additionsschaltung 90 ermittelt. Die Gesamtspur der Hinterräder GSH ist das Ausgangssignal des Speichers M4. Die Einzelspur der Vorderräder ist bezogen auf die geometrische Fahrachse. Die Einzelspur des linken Vorderrads ESLV ergibt sich durch Halbierung des Ausgangssignals des Speichers M4 in der Divisionsschaltung 94 und durch Addition des Ausgangssignals der Divisionsschaltung 94 zu dem Ausgangssignal des Speichers M2 in der Additionsschaltung 96. Die Einzelspur des rechten Vorderrades ESRV ergibt sich durch Halbierung des Ausgangssignals des Speichers M4 in der Divisionsschaltung 94 und Subtraktion des Ausgangssignals der Divisionsschaltung 94 von dem Ausgangssignal des Speichers M3 in der Subtraktionsschaltung 98. Dem Programmschalter "ERFASSEN" in Fig. 5 sind die Tasten "LH" für "linkes Hinterrad", "LV" für "linkes Vorderrad", "RV" für "rechtes Vorderrad", "RH" für "rechtes Hinterrad" zugeordnet. Dem Programmschalter "ANZEIGE" sind die Tasten "ELV" für "Einzelspur links vorne", "ERV" für "Einzelspur rechts vorne", "GSV" für "Gesamtspur der Vorderräder" und "GSH" für "Gesamtspur der Hinterräder" zugeordnet. Die Werte "GSV", "GSH", "ESLV" und "ESRV" können in einem entsprechenden Anzeigefeld der Schalttafel 64 in der Einheit 14 angezeigt werden.

In Fig. 6 ist gezeigt, wie das Winkelmeßgerät 10 und die Schaltung von dem Winkelgeber 54 bis zu dem Druckschalter 60 auch durch die Verknüpfung der Ausgangswerte des Winkelgebers 54 und der Multiplikationsschaltung 75 zur Erfassung und Anzeige der Einschlagwinkel der lenkbaren Räder des Kraftfahrzeuges eingesetzt werden kann. Die Einschagwinkel werden beispielsweise zur Erfassung der Spurdifferenzwinkel, des maximalen Einschlagwinkels und für die Anzeige vorbestimmter Winkel benötigt, die die Grundlage für die Errechnung von Nachlauf und Spreizung bilden.

Bei der Bestimmung des Einschlagwinkels der Vorderräder ist die Bezugsbasis für die Messung vorzugsweise das Vorderrad, das durch die Einschlagbewegung beispielsweise bei der Spurdifferenzwinkelmessung auf 20 Grad gestellt werden soll. Dieses Rad wird zunächst auf "Fahrt geradeaus" gestellt und nach Anlegen des Winkelmeßgeräts 10 an dieses Rad wird der Druckschlater 60 betätigt und der Schalter S1 geschlossen, worauf die Errechnung des Driftkorrekturwinkels beginnt. Sodann wird der Schalter S2 geschlossen, und das Rad wird eingeschlagen, wobei der Einschlagwinkel α laufend auf dem Anzeigefeld angezeigt wird, so daß die Bedienungsperson den Einschlagwinkel laufend kontrollieren kann. Wenn das Rad auf 20 Grad eingeschlagen ist, wird das Winkelmeßgerät 10 auf das andere Vorderrad umgesetzt, der Schalter S3 geschlossen, so daß der Einschlagwinkel β des anderen Rades gemessen und angezeigt wird. Die Differenz der Winkel α und β ist der Spurdifferenzwinkel. In entsprechender Weise können auch der maximale Einschlagwinkel und dergleichen gemessen werden. Bei der Messung des Radeinschlagwinkels kann vorgesehen sein, daß das Winkelmeßgerät auf Halterungen an den entsprechenden Rädern aufgesetzt wird, damit das Gerät von einer Bedienungsperson bedient werden kann. Ansonsten müßte eine Bedienungsperson die Räder einschlagen, während die andere Bedienungsperson das Meßgerät an dem Rad anhält. Da der Druckschalter 60 während des Radeinschlags geschlossen bleiben muß, damit eine kontinuierliche Anzeige erfolgen kann, kann der Druckschalter 60 für diese Messung in der geschlossenen Stellung arretierbar sein. Ebenso wie bei der vorher beschriebenen Spurmessung werden der Driftkorrekturwinkel und die durch den Seitenwechsel des Winkelmeßgeräts 10 bedingten Faktoren in der elektronischen Schaltung verrechnet.

**Patentansprüche**

1. Verfahren zur Radstellmessung, bei dem mit einem Winkelmeßgerät für jedes Rad der Winkel zwischen Rad und einer Bezugsbasis gemessen wird, ein dem jeweiligen Winkel entsprechendes elektrisches Ausgangssignal erzeugt wird und die zu ermittelnden Radstellungswerte durch Verknüpfung der Ausgangssignale errechnet werden, dadurch gekennzeichnet, daß als Bezugsbasis ein rotierender, kardanisch aufgehängter Kreisel verwendet wird, daß der Kreisel nacheinander von Rad zu Rad gebracht wird, um den entsprechenden Winkel zu messen, und daß nach jeder Messung der für das jeweilige Rad gemessene Winkel abgespeichert wird.

2. Verfahren nach Anspruch 1, dadurch gekennzeichnet, daß die Richtung der Bezugsbasis zunächst an einem der Räder, vorzugsweise einem Hinterrad, eingestellt wird und anschließend bis zum Ende der Vermessung unverändert bleibt.

3. Verfahren nach Anspruch 1 oder 2, dadurch gekennzeichnet, daß die Richtung der Bezugsbasis zunächst an einem anderen Fahrzeugteil bzw. an einem Rahmenkontrollpunkt eingestellt wird und anschließend bis zum Ende der Vermessung unverändert bleibt.

4. Verfahren nach einem der Ansprüche 1 bis 3, dadurch gekennzeichnet, daß das Winkelmeßgerät gegen das Felgenhorn des zu vermessenden Rades gehalten wird.

5. Verfahren nach einem der Ansprüche 1 bis 4, dadurch gekennzeichnet, daß die gemessenen Winkel um den sich aus der Erddrehung ergebenden Driftkorrekturwinkel korrigiert werden.

6. Verfahren nach Anspruch 5, dadurch gekennzeichnet, daß vor der ersten Messung an einer bestimmten Betriebsstätte der Driftwinkel der Bezugsbasis pro Zeiteinheit gemessen wird.

7. Verfahren nach Anspruch 6, dadurch gekennzeichnet, daß der Driftwinkel pro Zeiteinheit abrufbar abgespeichert wird.

8. Verfahren nach Anspruch 6 oder 7, dadurch gekennzeichnet, daß während der Vermessung die seit Einstellung der Richtung der Bezugsbasis verstrichene Zeit gemessen und mit dem zuvor gemessenen Driftwinkel pro Zeiteinheit multipliziert wird, um den Driftkorrekturwinkel in Abhängigkeit von der Zeit zu erhalten.

9. Vorrichtung zur Radstellungsmessung mit einer Winkelmeßanordnung, die an den Rädern anzuordnen ist und für jedes Rad ein elektrisches Winkelstellungs-Ausgangssignal erzeugt, und mit einer Rechenschaltung zur Bestimmung von Radstellungswerten aus den Ausgangssignalen der Winkelmeßanordnung, dadurch gekennzeichnet, daß die Winkelmeßanordnung ein einziges, mit jeweils einem der Räder koppelbares Winkelmeßgerät (10) umfaßt, daß als Bezugsbasis für den mittels des Winkelmeßgerätes (10) zu messenden Winkel ein kardanisch aufgehängter Kreisel im Winkelmeßgerät (10) vorgesehen ist, und daß Speichereinrichtungen vorgesehen sind, um die gemessenen Winkel für jedes der Räder zu speichern.

10. Vorrichtung nach Anspruch 9, dadurch gekennzeichnet, daß an einer Vorderseite des Gehäuses (16) des Winkelmeßgeräts (10) eine Ausrichtvorrichtung (26 bis 34) zum Ausrichten des Winkelmeßgeräts (10) relativ zu den zu vermessenden Rädern und gegebenenfalls zusätzlich zu einem anderen Fahrzeugteil vorgesehen ist.

11. Vorrichtung nach Anspruch 10, dadurch gekennzeichnet, daß die Ausrichtungsvorrichtung ein mit dem Gehäuse (16) des Winkelmeßgeräts (10) starr verbundenes Lineal (26) aufweist.

12. Vorrichtung nach Anspruch 11, dadurch gekennzeichnet, daß auf dem Lineal (26) Taststifte (32, 34) verschiebbar angeordnet sind.

13. Vorrichtung nach Anspruch 9, dadurch gekennzeichnet, daß die Achse (44) des äußeren Kardanrings (42) vertikal angeordnet ist und daß die Rotationsachse (40) im Kreisel im Betrieb im wesentlichen senkrecht zu dem zu vermessenden Rad angeordnet ist.

14. Vorrichtung nach Anspruch 13, dadurch gekennzeichnet, daß eine Einstelleinrichtung (62) vorgesehen ist, um den äußeren Kardanring (42) relativ zum Gehäuse (16) derart in eine Ausgangslage zu verschwenken, daß die Rotationsachse (40) des ruhenden Kreisels senkrecht zu der von der Ausrichtvorrichtung (26) definierten Bezugsgeraden steht.

15. Vorrichtung nach einem der Ansprüche 9 bis 14, dadurch gekennzeichnet, daß der Winkelmesser (54) des Winkelmeßgeräts (10) konzentrisch zur Achse (44) des äußeren Kardanrings (42) angeordnet und mit dieser Achse gekoppelt ist.

16. Vorrichtung nach einem der Ansprüche 9 bis 15, dadurch gekennzeichnet, daß das Winkelmeßgerät (10) mit zwei Handgriffen (18, 20) versehen ist und daß eine Drucktaste (60) zur Initiierung der Messung sich in Griffnähe des einen Handgriffs (18) befindet.

17. Vorrichtung nach einem der Ansprüche 9 bis 16, dadurch gekennzeichnet, daß sie eine Speichereinrichtung zum Abspeichern der jeweils gemessenen Winkel umfaßt.

18. Vorrichtung nach der Ansprüche 9 bis 17, dadurch gekennzeichnet, daß sie einen Speicher (72) zum Abspeichern des sich aus der Erddrehung ergebenden Driftwinkels pro Zeiteinheit umfaßt.

19. Vorrichtung nach Anspruch 18, dadurch gekennzeichnet, daß eine Rechenschaltung zur Bestimmung des Driftwinkels pro Zeiteinheit vorgesehen ist, die ein Zeitrelais (70) umfaßt, um die Änderung des Ausgangssignals des Winkelgebers (54) während einer vorbestimmten Zeitspanne zu messen.

20. Vorrichtung nach Anspruch 18 oder 19, dadurch gekennzeichnet, daß sie eine Rechenschaltung zur Ermittlung des für die jeweilige Messung geltenden Driftkorrekturwinkel umfaßt, die eine elektronische Uhr (74) zur Messung der seit Beginn der Vermessung verstrichenen Zeit und eine Multiplikationsschaltung (75) zur Multiplikation der verstrichenen Zeit mit dem gespeicherten Driftwinkel pro Zeiteinheit aufweist.

21. Vorrichtung nach Anspruch 20, dadurch gekennzeichnet, daß sie eine Rechenschaltung aufweist, um den jeweils gemessenen Winkel um den zum Zeitpunkt der Messung jeweils geltenden Driftkorrekturwinkel zu korrigieren.

**Revendications**

1. Procédé de mesure de la position des roues, dans lequel l'angle entre la roue et une base de référence est mesuré pour chaque roue à l'aide d'un appareil de mesure angulaire, un signal électrique de sortie correspondant à l'angle respectif est engendré et les valeurs de la position des roues sont calculées par voie de combinaison des signaux de sortie, caractérisé en ce qu'un gyroscope rotatif suspendu à la Cardan est utilisé comme base de référence, que le gyroscope est transporté successivement d'une roue à l'autre afin de mesurer l'angle respectif et qu'après chaque mesurage l'angle mesuré pour la roue respective est mis en mémoire.

2. Procédé selon la revendication 1, caractérisé en ce que la direction de la base de référence initialement est ajustée à une des roues, de préférence à une roue arrière, et après reste inchangée jusqu'à la fin du mesurage.

3. Procédé selon la revendication 1 ou 2, caractérisé en ce que la direction de la base de référence initialement est ajustée à un élément de véhicule ou à un point de contrôle du châssis et après reste inchangée jusqu'à la fin du mesurage.

4. Procédé selon l'une des revendications 1 à 3, caractérisé en ce que l'appareil de mesure angulaire est tenu contre le rebord de jante de la roue à mesurer.

5. Procédé selon l'une des revendications 1 à 4, caractérisé en ce que les angles mesurés sont corrigés de l'angle correcteur pour la dérive résultant de la rotation de la Terre.

6. Procédé selon la revendication 5, caractérisé en ce qu'avant le premier mesurage l'angle de la dérive de la base de référence par l'unité du temps est mesuré à une position établie de service.

7. Procédé selon la revendication 6, caractérisé en ce que l'angle de la dérive par l'unité temporaire est mis en mémoire en manière interrogable.

8. Procédé selon la revendication 6 ou 7, caractérisé en ce que pendant le mesurage le temps passé depuis l'ajustage de la direction de la base de référence est mesuré et est multiplié par l'angle de la dérive par l'unité temporaire mesuré en avant afin d'obtenir l'angle correcteur pour la dérive en dépendance du temps.

9. Dispositif de mesure de la position des roues avec un arrangement de mesure angulaire destiné à être arrangé aux roues et engendrant pour chaque roue un signal électrique de sortie de la position des roues et avec un circuit calculateur pour déterminer des valeurs de la position des roues par l'intermédiaire des signaux de sortie de l'arrangement de mesure angulaire, caractérisé en ce que l'arrangement de mesure angulaire comporte un seul appareil de mesure angulaire (10) qui peut être couplé avec une des roues respectivement, qu'un gyroscope suspendu à la Cardan est prévu dans l'appareil de mesure angulaire (10) comme base de référence pour l'angle à être mésuré au moyen de l'appareil de mesure angulaire (10) et que des unités mémoires sont prévus afin de mettre en mémoire les angles mesurés pour chaque roue.

10. Dispositif selon la revendication 9, caractérisé en ce que sur un panneau avant du boîtier (16) de l'appareil de mesure angulaire (10) un dispositif d'ajustage (26 à 34) est prévu pour orienter l'appareil de mesure angulaire (10) relatif aux roues à mesurer et le cas échéant de plus relatif à un autre élément de véhicule.

11. Dispositif selon la revendication 10, caractérisé en ce que le dispositif d'ajustage comporte une règle (26) rigidement accouplée au boîtier (16) de l'appareil de mesure angulaire (10).

12. Dispositif selon la revendication 11, caractérisé en ce que des palpeurs (32, 34) sont arrangés de manière déplaçable sur la règle (26).

13. Dispositif selon la revendication 9, caractérisé en ce que l'axe (44) du cercle extérieur du cardan (42) est arrangé verticalement et que l'axe de révolution (40) dans le gyroscope en état de marche est disposé essentiellement de manière perpendiculaire relatif à la roue à mesurer.

14. Dispositif selon la revendication 13, caractérisé en ce qu'un dispositif d'ajustement (62) est prévu afin de pivoter le cercle extérieur du cardan (42) relatif au boîtier (16) dans une position initiale tellement que l'axe de révolution (40) du gyroscope au repos est orienté perpendiculairement relatif à la ligne droite de référence définie par le dispositif d'ajustement (26).

15. Dispositif selon l'une des revendications 9 à 14, caractérisé en ce que le capteur angulaire (54) de l'appareil de mesure angulaire (10) est arrangé concentriquement relatif à l'axe (44) du cercle extérier du cardan (42) et est accouplé à ledit axe.

16. Dispositif selon l'une des revendications 9 à 15, caractérisé en ce que l'appareil de mesure angulaire (10) est muni de deux poignées (18, 20) et qu'un bouton-poussoir (60) pour initialiser le mesurage est disposé à proximité de la zone de travail de la poignée (18).

17. Dispositif selon l'une des revendications 9 à 16, caractérisé en ce qu'il comporte un dispositif mémoire afin de mémoriser les angles respectivement mesurés.

18. Dispositif selon l'une des revendications 9 à 17, caractérisé en ce qu'il comporte une mémoire (72) pour mémoriser l'angle de la dérive par unité temporaire resultant de la rotation de la Terre.

19. Dispositif selon la revendication 18, caractérisé en ce qu'un circuit calculateur est prévu pour déterminer l'angle de la dérive par unité temporaire, contenant un relais retardeur (70) afin de mesurer le changement du signal de sortie du capteur angulaire (54) pendant une période du temps pré-définie.

20. Dispositif selon l'une des revendications 18 ou 19, caractérisé en ce qu'il comporte un circuit calculateur pour trouver l'angle de la dérive étant valable pour le mesurage respectif, comportant une horloge électronique (74) pour mesurer le temps passé dpeuis le commencement de mesurage et un circuit multiplicateur (75) pour multiplier le temps passé avec l'angle de la dérive par unité temporaire mémorisé.

21. Dispositif selon la revendication 20, caractérisé en ce qu'il comporte un circuit calculateur afin de corriger l'angle mesuré respectivement de l'angle correcteur pour la dérive étant valable au temps de mesurage.

## Claims

1. Method for measuring the position of wheels, wherein the angle between the wheel and a reference basis is measured for each wheel with the aid of an angle measurement instrument, an electric output signal corresponding to the respective angle is generated and the wheel alignment parameters to be found are calculated by correlating the output signals, characterized in that a rotating gyroscope being suspended in cardanic manner is used as reference basis, that the gyroscope is subsequently moved from wheel to wheel for measuring the respective angle and that upon every measurement the angle measured for the respective wheel is stored.

2. Method as defined in claim 1, characterized in that the direction of the reference basis at first is adjusted at one of the wheels, preferably a rear wheel, and thereafter remains unchanged till the end of the measurement.

3. Method as defined in claim 1 or 2, characterized in that the direction of the reference basis at first is adjusted at another part of the vehicle or a check point of the chassis, resp., and thereafter remains unchanged till the end of the measurement.

4. Method as defined in one of claims 1 to 3, characterized in that the angle measurement instrument is held against the rim of the wheel to be measured.

5. Method as defined in one of the claims 1 to 4, characterized in that the measured angles are corrected by the drift correction angle resulting from the Earth rotation.

6. Method as defined in claim 5, characterized in that prior to the first measurement at a given workshop the drift angle of the reference basis per time unit is measured.

7. Method as defined in claim 6, characterized in that the drift angle per time unit is stored readably.

8. Method as defined in claim 6 or 7, characterized in that during the measurement the time having elapsed since the adjustment of the direction of the reference basis is measured and is multiplied with the drift angle per time unit measured before in order to obtain the drift correction angle in dependence on the time.

9. Device for measuring the position of wheels with an angle measurement arrangement which is to be disposed at the wheels and generates an electric wheel alignment output signal for each wheel, and with a calculation circuit for determining wheel alignment parameters out of the output signals of the angle measurement arrangement, characterized in that the angle measurement arrangement includes one single angle measurement instrument (10) adapted to be coupled to one of the wheels at a time, that as a reference basis for the angle to be measured by means of the angle measurement instrument (10) a gyroscope suspended in cardanic manner is provided for in the angle measurement instrument (10), and that storage means are provided for storing the measured angles for each of the wheels.

10. Device as defined in claim 9, characterized in that at a front face of the housing (16) of the angle measurement instrument (10) an adjustment device (26 to 34) is provided for adjusting the angle measurement instrument (10) in relation to the wheels to be measured and, if required, additionally to another part of the vehicle.

11. Device as defined in claim 10, characterized in that the adjustment device comprises a rule (26) rigidly connected to the housing (16) of the angle measurement instrument (10).

12. Device as defined in claim 11, characterized in that feeler pins (32, 34) are shiftably arranged on the rule (26).

13. Device as defined in claim 9, characterized in that the axis (44) of the outer gimbal (42) is arranged vertically and that the axis of rotation in the gyroscope during operation is basically perpendicularly arranged with respect to the wheel to be measured.

14. Device as defined in claim 13, characterized in that an adjustment means (62) is provided for tilting the outer gimbal (42) in relation to the housing (16) into a starting position in such manner that the axis of rotation (40) of the gyroscope at rest is perpendicular to the reference line defined by the adjustment device (26).

15. Device as defined in one of the claims 9 to 14, characterized in that the angle measurement device (54) of the angle measurement instrument (10) is arranged concentrically with respect to the axle (44) of the outer gimbal (42) and is coupled to said axle.

16. Device as defined in one of the claims 9 to 15, characterized in that the angle measurement instrument (10) comprises two handles (18, 20) and that a push button (60) for initiating the measurement is arranged close to the grip of one of the handles (18).

17. Device as defined in one of the claims 9 to 16, characterized in that it comprises a storage means for storing the respective measured angles.

18. Device as defined in one of the claims 9 to 17, characterized in that it comprises a memory (72) for storing the drift angle per time unit, resulting from the rotation of the Earth.

19. Device as defined in claim 18, characterized in that a calculation circuit for determining the drift angle per time unit is provided for, which includes a time-lag relay (70) for measuring the change of the output signal of the angle measurement device (54) during a given period of time.

20. Device as defined in claim 18 or 19, characterized in that it comprises a calculation circuit for calculating the drift correction angle valid for the respective measurement, which comprises an electronic clock (74) for measuring the time having elapsed since starting the measurement and a multiplication circuit (75) for multiplying the elapsed time with the stored drift angle per time unit.

21. Device as defined in claim 20, characterized in that it comprises a calculation circuit for correcting the respective measured angle by the respective drift correction angle valid at the time of measurement.

FIG : 1

14

12

10

FIG : 5

ERFASSEN

| LH | LV | RV | RH |

ANZEIGE

64

| ES LV | ES RV | GS V | GS H |

FIG. 2

FIG. 3

FIG: 4

EP 0 313 563 B1

FIG. 6